# EUROPÄISCHE PATENTANMELDUNG

(11) **EP 4 407 866 A1**
(43) Veröffentlichungstag der Anmeldung: **31.07.2024**
(21) Anmeldenummer: 24151863.8
(22) Anmeldetag: 15.01.2024
(51) Int. Cl.: H02S 20/24, F16B 5/00, F16B 7/22

(54) **ANORDNUNG ZUR SCHRÄGEN AUFSTELLUNG EINES SOLARMODULS**

(30) Priorität: 27.01.2023 DE 102023102004
(71) Anmelder: Renusol Europe GmbH, 80807 München (DE)
(72) Erfinder: Balen, Marko, 24257 Schwartbuck (DE); Heck, Dieter, 53579 Erpel (DE); Rossbach, Nils, 51103 Köln (DE); Schumacher, Christian, 50733 Köln (DE); Schwarz, Thomas, 53809 Ruppichteroth (DE); Steuer, Sven, 51766 Engelskirchen (DE)
(74) Vertreter: Patentanwälte Bauer Vorberg Kayser

(57) **Zusammenfassung**

Die Erfindung betrifft eine Anordnung mit einer an einer Schiene (12) angeordneten Firststütze (18), zur schrägen Aufstellung mindestens eines Solarmoduls (16), wobei die Firststütze (18) in einer Vormontagelage parallel zur Schiene (12) ausgerichtet ist und flach in der Schiene (12) angeordnet ist, und wobei die Firststütze (18) um eine Drehachse relativ zur Schiene (12) verdrehbar ist, um ausgehend von der Vormontagelage in einer aufrechten Endmontagelage angeordnet zu werden, wobei in der Endmontagelage ein unterer Teil der Firststütze (18) innerhalb der Schiene (12) angeordnet ist und wobei die Firststütze (18) ein federelastisches Sicherungsmittel (54) aufweist, welches in der Endmontagelage auf der Oberseite der Schiene (12) aufliegt und welches als Verdrehsicherung einem Rückdrehen der Firststütze (18) von der aufrechten Endmontagelage in die flache Vormontagelage entgegenwirkt.

## Beschreibung

Die Erfindung betrifft eine Anordnung zur schrägen Aufstellung mindestens eines Solarmoduls mit einer an einer Schiene angeordneten Firststütze gemäß Patentanspruch 1. Ferner betrifft die Erfindung ein Verfahren zur Montage einer Firststütze gemäß Patentanspruch 7, eine Firststütze gemäß Patentanspruch 9 und einen Sicherheitsclip zur Anordnung an einem Grundkörper einer Firststütze gemäß Patentanspruch 12.

Bei der Montage von Solarmodulen auf Flachdächern ist es bekannt, diese schräg auf dem Flachdach aufzustellen. Üblicherweise werden zur Befestigung von Solarmodulen auf einem Flachdach Schienen verwendet, entlang welcher ein oder mehrere Solarmodule angeordnet sind. Die Schrägstellung wird dadurch realisiert, dass die Solarmodule an einer Seite an der Schiene anliegen und auf einer anderen Seite auf einer sich von dem Flachdach bzw. der Schiene in die Höhe erstreckenden Firststütze. Je nach Höhe der Firststütze kann die Neigung der Solarmodule eingestellt werden.

Die zugrundeliegende Aufgabe der Erfindung ist es, eine Anordnung einer Schiene und Firststütze, ein Verfahren zur Montage einer Firststütze, eine Firststütze sowie einen Sicherungsclip zur Verfügung zu stellen, welche eine einfache und gleichzeitig sichere und langlebige Montage einer Firststütze an einer Schiene ermöglichen.

Die Lösung der Aufgabe erfolgt erfindungsgemäß mit den Merkmalen der unabhängigen Ansprüche. Weitere praktische Ausführungsformen und Vorteile sind in Verbindung mit den abhängigen Ansprüchen beschrieben.

Eine erfindungsgemäße Anordnung zur schrägen Aufstellung mindestens eines Solarmoduls umfasst eine Schiene und eine an der Schiene angeordnete Firststütze.

Eine Schiene umfasst insbesondere zwei parallel verlaufende, sich in einer Längsrichtung erstreckende Seitenwände, welche durch eine Bodenplatte verbunden sind. Die Seitenwände sind insbesondere voneinander beabstandet und dazwischen ist ein Spalt gebildet, insbesondere zur Anordnung und Aufnahme der Firststütze.

In einer Vormontagelage ist die Firststütze parallel zur Schiene ausgerichtet ist flach in der Schiene angeordnet. Das heißt die Firststütze erstreckt sich in der Vormontagelage ebenfalls in Längsrichtung. Insgesamt ist die Anordnung in der Vormontagelage flach.

Die Firststütze ist um eine Drehachse relativ zur Schiene verdrehbar bzw. verschwenkbar, um ausgehend von der Vormontagelage in einer aufrechten Endmontagelage angeordnet zu werden. In der Endmontagelage steht die Firststütze senkrecht gegenüber Schiene hervor und dient zur Abstützung und Erhöhung einer Seite eines Solarmoduls. In der Endmontagelage ein unterer Teil der Firststütze innerhalb der Schiene angeordnet und insbesondere mittels eines Bolzens gegen Verschiebung in Längsrichtung fixiert.

Die Firststütze weist weiter ein federelastisches Sicherungsmittel auf, welches in der Endmontagelage auf der Oberseite der Schiene, insbesondere auf der Oberseite der Seitenwand, aufliegt und welches als Verdrehsicherung einem Rückdrehen von der aufrechten Endmontagelage in die flache Vormontagelage entgegenwirkt. Die federelastischen Sicherungsmittel sind in der Vormontagelage eingefedert und federn in der Endmontagelage aus.

Durch die einerseits verdrehbare Anordnung der Firststütze in der Schiene kann die Firststütze in zwei unterschiedlichen Positionen relativ zur Schiene angeordnet werden, welches insbesondere für den Transport und die Lagerung Vorteile bietet. In der Vormontagelage ist die Anordnung flach, was Lagerraum du Verpackung spart. Durch ein einfaches Verdrehen der Firststütze kann dann die Endmontagelage erreicht werden. Damit kann die Firststütze einfach und schnell am Aufbauort der Solarmodule montiert werden.

Weiterhin wird durch die federelastische Verdrehsicherung mit einfachen Mitteln sichergestellt, dass die Federstütze nicht unabsichtlich aus der Endmontagelage zurück rotiert werden kann. Das Ausfedern der Sicherungsmittel ist zusätzlich eine haptische Rückmeldung, dass die Endmontagelage erreicht ist. Um die Firststütze wieder in die Vormontagelage zurückzurotieren, kann das federelastische Spannmittel manuell eingefedert werden.

Insbesondere ist das federelastische Sicherungsmittel durch zwei federelastische Flügel gebildet. Die Flügel erstrecken sich in ausgefedertem Zustand von der Firststütze weg und zudem in Längsrichtung. Die beiden Flügel erstrecken sind insbesondere von einem Anbindungsabschnitt in entgegensetzte Richtungen. Als Flügel werden hier längliche Materialstreifen bezeichnet, welche an einem Ende fest angebunden sind und sich von da aus zu einem freien Ende erstrecken.

In einer praktischen Ausführungsform der Anordnung ist die Firststütze in der Endmontagelage klemmend in der Schiene fixiert. Die klemmende Fixierung wirkt zusätzlich einem Verdrehen entgegen und stellt anderseits sicher, dass die Firststütze mit der Schiene und insbesondere der Bodenplatte der Schiene in Kontakt steht. Dies ist insbesondere aus Gründen des Potentialausgleichs zwischen verschiedenen Modulen von Vorteil.

Die klemmende Fixierung wird insbesondere durch eine plastisch verformbare Klemmstruktur realisiert. Insbesondere ist die Klemmstruktur durch einen das Ende der Firststütze bildenden Stegs ausgebildet, welcher konvex gewölbt ist. Der Steg schließt einen Hohlraum ein, in welchen sich der Steg hineinverformen kann.

Die klemmende Fixierung ist dadurch realisiert, dass der Abstand d_{F} in Vormontagelage zwischen dem Mittelpunkt einer Öffnung zur Durchführung des Bolzens und dem gewölbten Steg größer gewählt ist als der Abstand ds zwischen dem Mittelpunkt einer Öffnung in der Schiene zur Durchführung des Bolzens und der Bodenplatte der Schiene. Beim Aufrichten der Firststütze, verformt sich dann der Steg und dringt in den Hohlraum ein. Der Steg verformt sich so weit, dass der Abstand von Bodenplatte zum Bolzen genau erreicht ist. Der Steg weist auf seiner zum Hohlraum gerichteten Seite einen Vorsprung auf, welcher in den Hohlraum hineinragt und die maximale Eindringtiefe des Steges in den Hohlraum begrenzt.

Wie vorstehend schon beschrieben, erstreckt sich durch die Schiene und die Firststütze ein Bolzen, welcher als Drehachse dient, um welche die Firststütze gegenüber der Schiene verdrehbar ist. Der Bolzen erstreckt sich durch jeweils fluchtende Öffnungen in der Schiene und der Firststütze. Ein Bolzen stellt dabei ein einfaches Fixierungsmittel dar, welches gleichzeitig als Drehachse dienen kann.

Die Erfindung betrifft auch ein Verfahren zur Montage einer Firststütze an einer Schiene, wobei die Firststütze zunächst in einer Vormontagelage in der Schiene angeordnet wird. In der Vormontagelage wird die Firststütze parallel zur Schiene ausgerichtet und in dieser liegend angeordnet. Zur Fixierung der Firststütze in der Schiene wird anschließend ein Bolzen durch eine fluchtende Öffnung in der Schiene und der Firststütze gesteckt. In der Vormontagelage kann die Anordnung aus Schiene und Firststütze gut transportiert werden.

Für die Montage am Aufstellungsort des mindestens einen Solarmoduls wird die Firststütze zum Übergang in die Endmontagelage gegenüber der Schiene verdreht. Der Bolzen dient dabei als Drehachse. Die Firststütze wird wo weit verdreht, bis die Firststütze in einer Endmontagelage senkrecht zur Schiene ausgerichtet ist und das federelastische Sicherungsmittel als Verdrehsicherung auf der Oberseite der Schiene ausfedert. Durch das ausfedernde Sicherungsmittel ist zusätzlich zur Verdrehsicherung eine haptische Rückmeldung realisiert, dass die Endmontagelage erreicht ist.

Insbesondere wird die Firststütze so weit verdreht, dass die Firststütze in der Endmontagelage klemmend in der Schiene fixiert ist. In Bezug auf die klemmende Fixierung wird auf die vorstehende Beschreibung verwiesen.

Die Erfindung betrifft auch eine Firststütze zur schrägen Aufstellung eines Solarmoduls, insbesondere auf einem Flachdach. Die Firststütze weist einen Grundkörper auf. Der Grundkörper weist insbesondere eine längliche, in einer Seitenansicht im Wesentlichen ovale Geometrie auf. Der Grundkörper kann als Hohlkörper ausgebildet sein, wobei eine durch den Hohlraum Stützstreben verlaufen, zur Stabilisierung des Grundkörpers. Der Grundkörper weist eine Vorderseite, eine Rückseite und zwei Seiten auf. Ferner weist der Grundkörper ein erstes Solarmodulende zum unmittelbaren oder mittelbaren Befestigen eines Solarmoduls und ein zweites Befestigungs-Ende zur Befestigung an einer Schiene auf. Das zweite Befestigungs-Ende weist mindestens ein federelastisches Sicherungsmittel auf, welches gegenüber einer Seite hervorragt und, wie vorstehend beschrieben, als Verdrehsicherung wirkt.

Insbesondere weist die Firststütze an dem Befestigungs-Ende eine plastisch verformbare Klemmstruktur auf. Auch hierzu wird auf die vorstehende Beschreibung verwiesen.

In einer praktischen Ausführungsform der Firststütze ist die Federstütze zweiteilig ausgebildet und weist den Grundkörper und einen separaten Sicherungsclip mit dem federelastischen Sicherungsmittel und/oder der Klemmstruktur auf.

Insofern betrifft die Erfindung auch einen Sicherungsclip zur Anordnung an einem Grundkörper einer Firststütze. Der Sicherungsclip umfasst einen flachen Clip-Grundkörper, welcher sich in einer Grundkörperebene erstreckt. Von dem Clip-Grundkörper erstreckt sich ein federelastisches Sicherungsmittel, welches gegenüber Grundkörperebene hervorragt. Bei dem federelastischen Sicherungsmittel handelt es sich insbesondere um mindestens einen federelastischen Flügel.

Insbesondere ist an dem dem Sicherungsmittel gegenüberliegend angeordneten Ende des Clip-Grundkörpers eine plastisch verformbare Klemmstruktur angeordnet. Hierzu wird wieder auf die vorstehende Beschreibung verwiesen, in welcher die Klemmstruktur erläutert wird.

Um den Sicherungsclip am Grundkörper der Firststütze zu befestigen, ragen aus der Grundkörperebene zwei Haltearme hervor. Die Haltearme erstrecken sich in einem mittleren Abschnitt des Grundkörpers. Die Haltearme sind insbesondere auf ihrer Oberseite und Unterseite geriffelt ausgebildet. Insbesondere weist der Grundkörper korrespondierende Öffnungen auf, in welche die Haltearme einführbar sind.

Im Folgenden werden in Verbindung mit den Figuren praktische Ausführungsformen und Vorteile beschrieben. Es zeigen:
- Fig. 1: eine Anordnung aus zwei Schienen und zwei daran angeordneten Solarmodulen gemäß Stand der Technik,
- Fig. 2: einen Grundkörper einer Firststütze in einer perspektivischen Ansicht von schräg vorne,
- Fig. 3: einen Sicherungsclip in einer Ansicht von vorne,
- Fig. 4: den Sicherungsclip aus Fig. 3 in einer Ansicht von oben,
- Fig. 5: den Sicherungsclip aus Fig. 3 und 5 in einer perspektivischen Ansicht,
- Fig. 6: eine Anordnung einer Firststütze in einer Schiene in einer Seitenansicht in einer teilweise geschnittenen Darstellung (gemäß Schnittlinie aus VI-VI aus Fig. 7), wobei die Firststütze sich in einer Vormontagelage befindet,
- Fig. 7: die Anordnung aus Fig. 6 in einer Draufsicht,
- Fig. 8: die Anordnung aus Fig. 6 und 7 in einer perspektivischen Ansicht,
- Fig. 9: die Anordnung aus den Fig. 6-8 in einer Seitenansicht in einer teilweise geschnittenen Darstellung, wobei die Firststütze sich in einer Zwischenlage befindet,
- Fig. 10: die Anordnung aus Fig. 9 in einer perspektivischen Ansicht,
- Fig. 11: die Anordnung aus den Fig. 6-10 in einer Seitenansicht in einer teilweise geschnittenen Darstellung, wobei die Firststütze sich in einer Endmontagelage befindet,
- Fig. 12: die Anordnung aus Fig. 11 in einer Draufsicht, und
- Fig. 13: die Anordnung aus Fig. 11 und 12 in einer perspektivischen Ansicht.

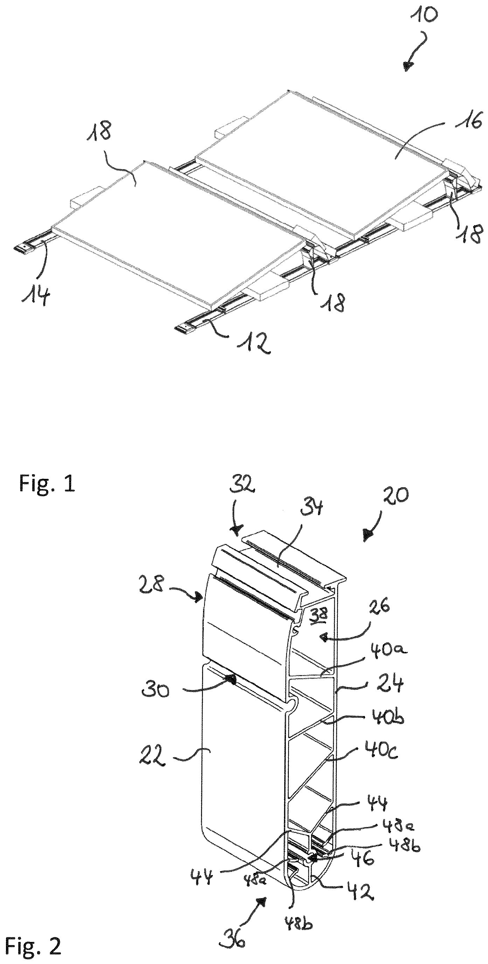

In Fig. 1 ist als Übersicht ein Photovoltaik-Montagesystem 10 gezeigt, welches zur Anordnung auf einem Flachdach vorgesehen ist. Es handelt sich um ein Photovoltaik-Montagesystem 10 gemäß Stand der Technik. Das Photovoltaik-Montagesystem 10 umfasst eine erste (hier linke) Schiene 12 und eine zweite (hier rechte) Schiene 14. An den Schienen 12, 14 sind zwei Solarmodule 16 befestigt. Die Solarmodule 16 sind hier schräg angeordnet. Die erhöhte Seite der Solarmodule 16 wird dabei jeweils durch eine an der Schiene 12, 14 befestigte Firststütze 18 gestützt.

Im Folgenden wird in Verbindung mit den Figuren 2 bis 13 die Anordnung einer Firststütze 18 an einer Schiene 12 im Detail erläutert.

In Fig. 2 ist zunächst ein Grundkörper 20 einer Firststütze 18 separat dargestellt. Der Grundkörper 20 ist als länglicher, in einer Seitenansicht, ovaler Hohlkörper ausgebildet. Der Grundkörper 20 weist eine Vorderseite 22 und eine Rückseite 24 und zwei Seitenflächen 26, 28 auf. Die Seitenflächen 26, 28 des Grundkörpers 20 sind offen.

Auf der Vorderseite 22 des Grundkörpers 20 ist eine im Querschnitt betrachtet u-förmige Nut 30 ausgebildet.

Der Grundkörper 20 weist ein erstes Modul-Ende 32 auf, welches zur unmittelbaren oder mittelbaren Befestigung eines Solarmoduls 16 bestimmt ist. Das erste Modul-Ende 32 ist als Schiene 34 ausgebildet, wobei in die Schiene 34 insbesondere eine Modulklemme (nicht dargestellt) einführbar ist. Ferner weist der Grundkörper 20 ein zweites Befestigungs-Ende 36 auf, welches dazu dient, die Firststütze 18 in einer Schiene 12 zu positionieren.

An dem zweiten Befestigungs-Ende 36 ist der Grundkörper 20 konvex gebogen, und weist eine runde Außenkontur auf. Das zweite Befestigungs-Ende 36 ist als Radius ausgebildet, welcher sich von der Vorderseite 22 zur Rückseite 24 erstreckt.

Die Vorderseite 22 und die Rückseite 24 sind über mehrere durch den Hohlraum 38 verlaufende Querstreben 40 abgestützt. Vom ersten Modul-Ende 32 in Richtung zweiten Befestigungs-Ende 36 aus betrachtet, erstreckt sich eine Querstrebe 40a diagonal durch den Hohlraum 38, eine Querstrebe 40b erstreckt sich senkrecht zu der Vorderseite 22 und Rückseite 24 durch den Hohlraum 38 und eine weitere Querstrebe 40c ebenfalls diagonal. Die drei Querstreben 40a, 40b, 40c erstrecken sich direkt von der Vorderseite 22 zur Rückseite 24.

Am zweiten Befestigungs-Ende 36 ist eine Längsstrebe 42 angeordnet, welche über zwei schräg verlaufende Querstreben 44 jeweils an der Vorderseite 22 und Rückseite 24 abgestützt ist. Es ergibt sich eine y-förmige Geometrie. Auf mittlerer Höhe der Längsstrebe 42 ist eine kreisförmige Öffnung 46 zur Einführung eines Bolzens (hier nicht dargestellt) ausgebildet. Die Öffnung 46 ist hier nur teilweise von Material umschlossen.

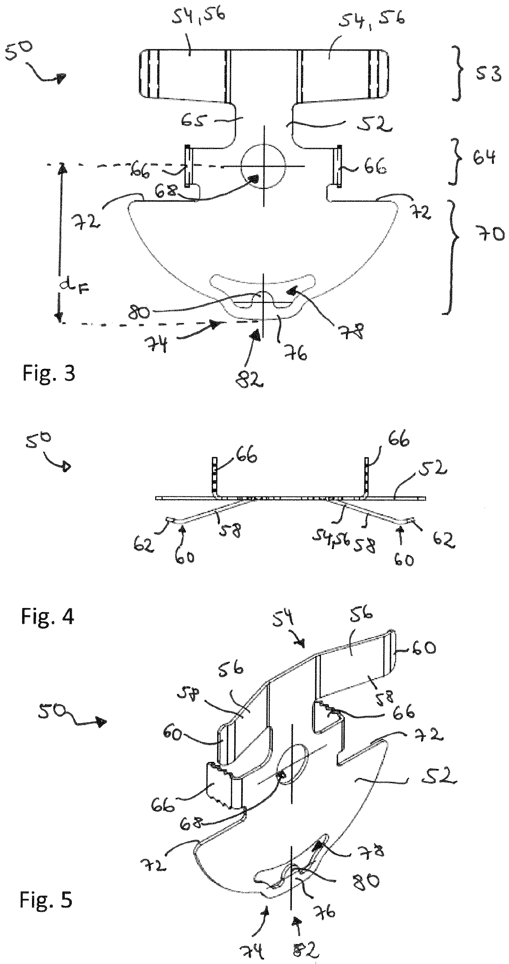

Zusätzlich ragen am zweiten Befestigungs-Ende 36 jeweils zwei Rippen 48a, 48b von der Vorderseite 22 und der Rückseite 24 in den Hohlraum 38. Die Rippen 48a, 48b sind dabei jeweils aufeinander zulaufend ausgebildet, sodass sich der Abstand von zwei sich von einer Seite 22, 24 aus erstreckenden Rippen 48a, 48b in Richtung Hohlraum 38 verringert. Zwischen zwei korrespondierenden Rippen 48a, 48b kann jeweils ein Haltearm 66 (vgl. Figuren 3 bis 5) eines Sicherungsclips 50 aufgenommen werden.

In den Fig. 3 bis 5 ist ein Sicherungsclip 50 dargestellt. Der Sicherungsclip 50 dient zur Anordnung am Befestigungs-Ende 36 des Grundkörpers 20 der Firststütze 18.

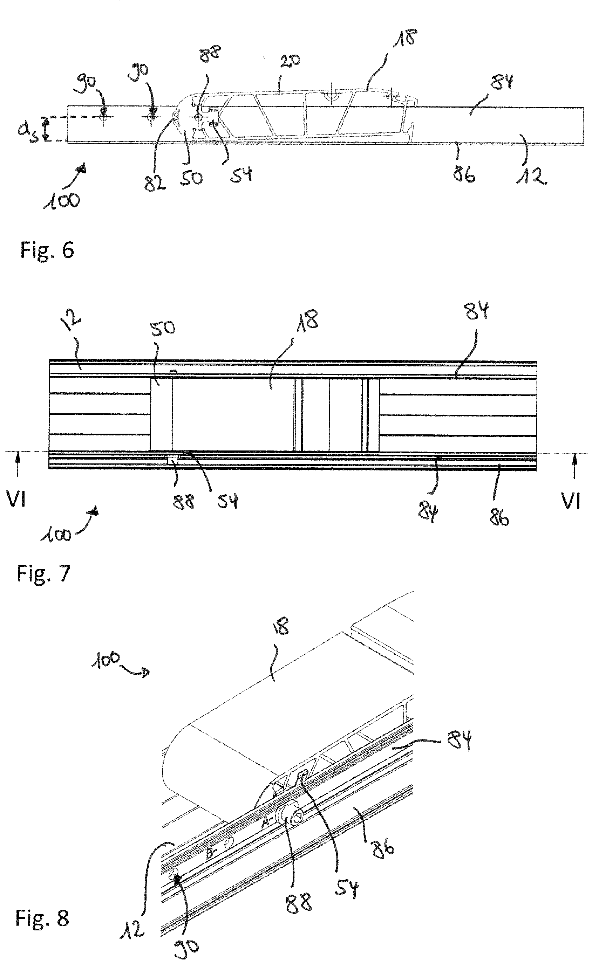

Im Folgenden wird zunächst der Sicherungsclip 50 beschrieben und dann in Verbindung mit den Figuren 6 bis 13 die Funktionsweise einer Firststütze 18 aus Grundkörper 20 und daran angeordnetem Sicherungsclip 50 erläutert.

Der Sicherungsclip 50 weist einen flachen Clip-Grundkörper 52 auf, welcher sich in einer Grundkörperebene erstreckt. Der Sicherungsclip 50 ist hier einteilig ausgebildet.

In einem oberen Abschnitt 53 weist der Grundkörper 52 ein aus der Grundkörperebene hervorragendes, federelastisches Sicherungsmittel 54 auf. Das federelastische Sicherungsmittel 54 ist hier durch zwei Flügel 56 gebildet. Die Flügel 56 sind an einem Ende fest mit dem Clip-Grundkörper 52 verbunden. Von dem festgelegten Ende erstrecken sich die Flügel 56 mit einem ersten Flügelabschnitt 58 schräg zur der Grundkörperebene. Zu den freien Enden hin weisen die Flügel 58 jeweils einen Knick 60 auf, wobei sich ein an den ersten Flügelabschnitt 58 anschließender zweiter Flügelabschnitt 62 im Winkel zu dem ersten Flügelabschnitt 58 erstreckt, in Richtung der Grundkörperebene.

An den oberen Abschnitt 53 grenzt in Hochrichtung des Clip-Grundkörpers 52 betrachtet ein mittlerer Abschnitt 64 an. Zwischen dem oberen Abschnitt 53 und mit mittleren Abschnitt 64 weist der Grundkörper einen Hals 65 auf. In dem mittleren Abschnitt 64 weist der Clip-Grundkörper 52 zwei Haltearme 66 auf. Die beiden Haltearme 66 erstecken sich beabstandet voneinander aus der Grundkörperebene, in die entgegengesetzte Richtung des federelastischen Sicherungsmittels 54. Die Haltearme 66 weisen an ihrer Oberseite und Unterseite eine geriffelte Oberfläche auf. Zwischen den beiden Haltearmen 66 ist eine Öffnung 68 ausgebildet, durch welche ein Bolzen führbar ist.

An den mittleren Abschnitt 64 grenzt ein unterer Abschnitt 70 an. In diesem unteren Abschnitt 70 weist der Clip-Grundkörper 52 zwei Schultern 72 auf, welche sich in der Grundkörperebene erstrecken. Das Ende des Clip-Grundkörpers 52 weist eine gerundete Außenkontur auf. Das Ende selbst ist durch einen gewölbten Vorsprung 74 gebildet. Der gewölbte Vorsprung 74 umfasst einen konvex gekrümmten Steg 76, der einen Hohlraum 78 einschließt. Der Steg 76 weist auf seiner zum Hohlraum 78 gerichteten Seite einen Vorsprung 80 auf, welcher in den Hohlraum 78 hineinragt. Wie im Folgenden noch deutlich wird, dienen der Steg 78 und der Hohlraum 80 als Klemmstruktur 82 zur klemmenden Fixierung der Firststütze 18 in einer Schiene 12.

Für die Montage der Firststütze 18 ist der Sicherungsclip 50 an dem Grundkörper 20 der Firststütze 18 befestigt. Dazu sind die Haltearme 66 zwischen den zwei Rippen 48a, 48b hineinragend angeordnet und so der Sicherungsclip 50 klemmend an dem Grundkörper 20 fixiert.

In den Fig. 6 bis 13 ist jeweils eine Anordnung 100 aus Schiene 12 und Firststütze 18 dargestellt, anhand derer im Folgenden die Funktionsweise der Anordnung 100 erläutert wird.

In Fig. 6 bis 8 ist eine Anordnung 100 aus Firststütze 18 und dazu korrespondierender Schiene 12 dargestellt, wobei sich die Firststütze 18 in einer Vormontagelage befindet.

Die Schiene 12 weist zwei parallel verlaufende, sich in einer Längsrichtung erstreckende Seitenwände 84 und eine Bodenplatte 86 auf. In der Vormontagelage liegt die Firststütze 18 flach in der Schiene 12, sodass sich der Grundkörper 20 in Längsrichtung der Schiene 12 erstreckt. Die federelastischen Flügel 56 liegen in der Vormontagelage auf der Innenseite einer Seitenwand 84 an und sind dadurch zumindest teilweise eingefedert bzw. vorgespannt.

Die Firststütze 18 ist mit einem Bolzen 88 an der Schiene 12 fixiert. Dazu ist der Bolzen 88 in miteinander fluchtende Öffnungen 46, 68, 90 in der Schiene 12, dem Sicherungsclip 50 und der Firststütze 18 durchragend angeordnet.

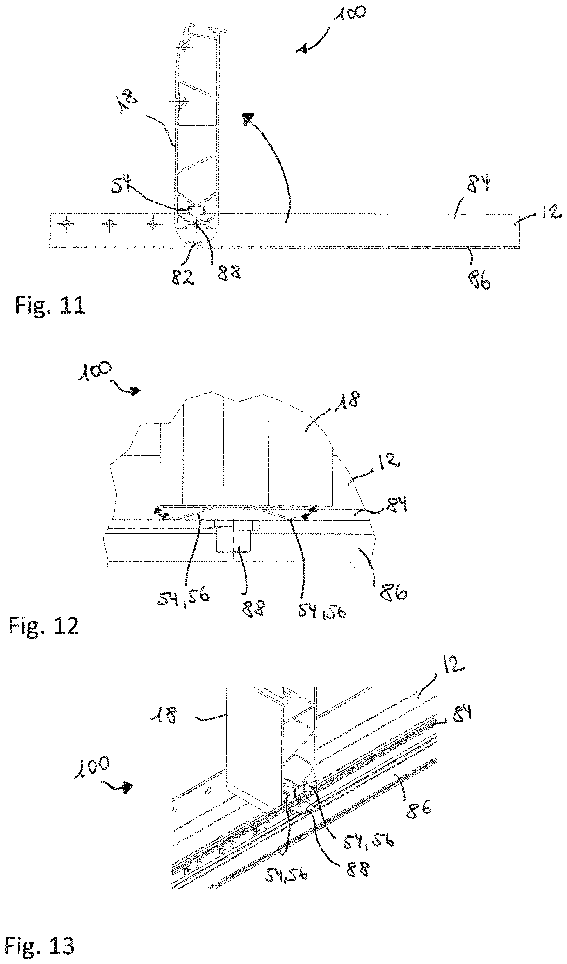

Wie gut aus einer Zusammenschau der Fig. 6, 9 und 11 zu erkennen ist, ist die Firststütze 18 von der flachen Vormontagelage bis zu einer Endmontagelage, in welcher die Firststütze 18 dann denkrecht zur Schiene angeordnet ist (Fig. 11-13), relativ zur Schiene 12 verschwenkbar. Dabei dient der Bolzen 88 als Drehachse.

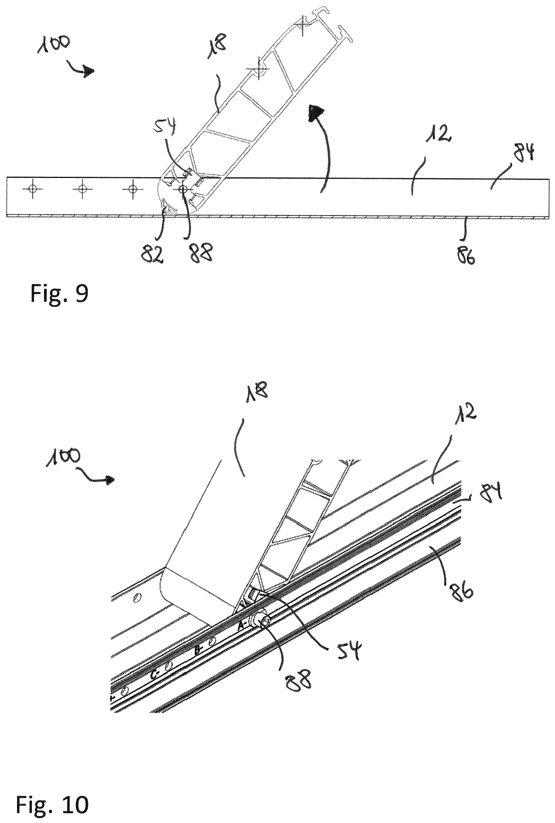

In den Fig. 9 und 10 ist die Firststütze 18 in einer Zwischenlage gezeigt, in welcher die Firststütze 18 noch nicht ganz aufgerichtet ist.

In Fig. 11 bis 13 ist die Firststütze 18 dann in einer Endmontagelage gezeigt. In dieser Endmontagelage ist die Firststütze 18 senkrecht zur Schiene 12 ausgerichtet.

Die vorher eingefederten federelastischen Sicherungsmittel 54 bzw. Flügel 56 sind nun ausgefedert und liegen an der Oberseite einer Seitenwand 84 der Schiene 12 an. (vgl. Fig. 13). Die Flügel 56 wirken damit als Verdrehsicherung, gegen ein Rückdrehen um die Drehachse. Um die Firststütze 18 wieder in die Vormontagelage zurückzurotieren, können die federelastischen Flügel 56 manuell eingefedert werden.

Ferner wird nun auch die Funktion der Klemmstruktur 82 deutlich. Der Abstand d_{F} zwischen dem Mittelpunkt der Öffnung 68 in dem Sicherungsclip 50 und dem äußersten Ende des Steges 76 weist ein Übermaß gegenüber dem Abstand dₛ von der Bodenplatte 86 zum Mittelpunkt der Öffnung 90 in der Schiene auf. Beim Verdrehen der Firststütze 18 von der Vormontagelage in die Endmontagelage verformt sich der Steg 76 plastisch und bewegt sich in den Hohlraum 78 hinein, so dass die Firststütze 18 zwischen dem Bolzen 88 und der Bodenplatte 86 klemmend fixiert ist. Der Vorsprung 80 definiert dabei die maximal mögliche Eindringtiefe des Steges 76 in den Hohlraum 78. Durch die klemmende Fixierung wird sichergestellt, dass die Firststütze 18 in Kontakt mit der Schiene 20 ist.

### Bezugszeichenliste

- 10: Photovoltaik-Montagesystem
- 12: erste Schiene
- 14: zweite Schiene
- 16: Solarmodul
- 18: Firststütze
- 20: Grundkörper
- 22: Vorderseite
- 24: Rückseite
- 26: Seitenfläche
- 28: Seitenfläche
- 30: Nut
- 32: erstes Modul-Ende
- 34: Schiene (am Grundkörper)
- 36: zweites Befestigungs-Ende
- 38: Hohlraum
- 40a-c: Querstrebe
- 42: Längsstrebe
- 44: Querstrebe
- 46: Öffnung
- 48a,b: Rippe
- 50: Sicherungsclip
- 52: Clip-Grundkörper
- 53: oberer Abschnitt
- 54: federelastisches Sicherungsmittel
- 56: Flügel
- 58: erster Flügelabschnitt
- 60: Knick
- 62: zweiter Flügelabschnitt
- 64: mittlerer Abschnitt
- 65: Hals

- 66: Haltearm
- 68: Öffnung
- 70: unterer Abschnitt
- 72: Schulter
- 74: gewölbter Vorsprung
- 76: Steg
- 78: Hohlraum
- 80: Vorsprung
- 82: Klemmstruktur
- 84: Seitenwand (Schiene)
- 86: Bodenplatte (Schiene)
- 88: Bolzen
- 90: Öffnung (Schiene)
- 100: Anordnung

## Patentansprüche

1. Anordnung mit einer an einer Schiene (12) angeordneten Firststütze (18), zur schrägen Aufstellung mindestens eines Solarmoduls (16), wobei die Firststütze (18) in einer Vormontagelage parallel zur Schiene (12) ausgerichtet ist und flach in der Schiene (12) angeordnet ist, und wobei die Firststütze (18) um eine Drehachse relativ zur Schiene (12) verdrehbar ist, um ausgehend von der Vormontagelage in einer aufrechten Endmontagelage angeordnet zu werden, wobei in der Endmontagelage ein unterer Teil der Firststütze (18) innerhalb der Schiene (12) angeordnet ist und wobei die Firststütze (18) ein federelastisches Sicherungsmittel (54) aufweist, welches in der Endmontagelage auf der Oberseite der Schiene (12) aufliegt und welches als Verdrehsicherung einem Rückdrehen der Firststütze (18) von der aufrechten Endmontagelage in die flache Vormontagelage entgegenwirkt.

2. Anordnung nach dem vorstehenden Anspruch,
**dadurch gekennzeichnet, dass**
das federelastische Sicherungsmittel (54) durch mindestens einen federelastischen Flügel (56) gebildet ist.

3. Anordnung nach einem der vorstehenden Ansprüche,
**dadurch gekennzeichnet, dass**
die Firststütze (18) in der Endmontagelage klemmend in der Schiene (12) fixiert ist.

4. Anordnung nach dem vorstehenden Anspruch,
**dadurch gekennzeichnet, dass**
die klemmende Fixierung mittels einer plastisch verformbaren Klemmstruktur (82) realisiert ist.

5. Anordnung nach dem vorstehenden Anspruch,
**dadurch gekennzeichnet, dass**
die plastische verformbare Klemmstruktur (82) einen konvex gewölbten Steg (76) und ein von dem gewölbten Steg (76) eingeschlossenen Hohlraum (78) umfasst.

6. Anordnung nach einem der vorstehenden Ansprüche,
**dadurch gekennzeichnet, dass**
sich durch die Schiene (12) und die Firststütze (18) durch jeweils fluchtende Öffnungen (46, 68, 90) ein Bolzen (88) erstreckt, wobei der Bolzen (88) als Drehachse für die Firststütze (18) dient.

7. Verfahren zur Montage einer Firststütze (18) an einer Schiene (12), wobei zunächst die Firststütze (18) in einer Vormontagelage in der Schiene (12) angeordnet wird, wobei die Firststütze (18) parallel zur Schiene (12) ausgerichtet und in dieser liegend angeordnet wird und wobei anschließend ein Bolzen (88) durch eine fluchtende Öffnung (90) in der Schiene (12) und eine Öffnung (46) der Firststütze (18) gesteckt wird, wobei die Firststütze (18) zum Übergang in die Endmontagelage gegenüber der Schiene (12) verdreht wird, um den Bolzen (88) als Drehachse, bis die Firststütze (18) in einer Endmontagelage senkrecht zur Schiene (12) ausgerichtet ist und das federelastische Sicherungsmittel (54) als Verdrehsicherung auf der Oberseite der Schiene (12) ausfedert.

8. Verfahren nach dem vorstehenden Anspruch,
**dadurch gekennzeichnet, dass**
die Firststütze (18) in die Endmontagelage verdreht wird, bis die Firststütze (18) klemmend in der Schiene (12) fixiert ist

9. Firststütze zur schrägen Aufstellung eines Solarmoduls (16), wobei die Firststütze (18) einen Grundkörper (20) aufweist, wobei der Grundkörper (20) eine Vorderseite (22), eine Rückseite (24) und zwei Seitenflächen (26, 28) aufweist, wobei der Grundkörper (20) ein erstes Modul-Ende (32) zum Befestigen eines Solarmoduls (16) und ein zweites Befestigungs-Ende (36) zur Befestigung an einer Schiene (12) aufweist, wobei das zweite Befestigungs-Ende (36) mindestens ein federelastisches Sicherungsmittel (54) aufweist, welches gegenüber einer Seitenfläche (26) hervorragt.

10. Firststütze nach dem vorstehenden Anspruch,
**dadurch gekennzeichnet, dass**
die Firststütze (18) an dem Befestigungs-Ende (36) eine plastisch verformbare Klemmstruktur (82) aufweist.

11. Firststütze nach einem der beiden vorstehenden Ansprüche,
**dadurch gekennzeichnet, dass**
die Federstütze (18) zweiteilig ausgebildet ist und einen Grundkörper (20) und einen separaten Sicherungsclip (50) mit dem federelastischen Sicherungsmittel (54) aufweist.

12. Sicherungsclip zur Anordnung an einem Grundkörper (20) einer Firststütze (18), umfassend einen flachen Clip-Grundkörper (52) mit einem federelastischen Sicherungsmittel (54), welches gegenüber der Grundkörperebene hervorragt.

13. Sicherungsclip nach dem vorstehenden Anspruch,
**dadurch gekennzeichnet, dass**
an dem dem federelastischen Sicherungsmittel (54) gegenüberliegenden Ende des Clip-Grundkörpers (52) eine plastisch verformbare Klemmstruktur (82) angeordnet ist.

14. Sicherungsclip nach einem der beiden vorstehenden Ansprüche,
**dadurch gekennzeichnet, dass**
aus der Grundkörperebene zwei Haltearme (66) zur Befestigung des Sicherungsclips (50) am Grundkörper (20) der Firststütze (18) hervorragen.
